# EUROPÄISCHE PATENTANMELDUNG

(11) **EP 2 657 063 A1**
(43) Veröffentlichungstag der Anmeldung: **30.10.2013**
(21) Anmeldenummer: 12166019.5
(22) Anmeldetag: 27.04.2012
(51) Int. Cl.: B60L 11/18

(54) **Ladevorrichtung**

(71) Anmelder: Brusa Elektronik AG, 9466 Sennwald (CH)
(72) Erfinder: Krause, Axel, 9650 Nesslau (CH); Matt, Phillipp, 6820 Frastanz (AT)
(74) Vertreter: Patentbüro Paul Rosenich AG

(57) **Zusammenfassung**

Die Erfindung bezieht sich auf eine Ladevorrichtung (2) zum Einbau in ein Elektrofahrzeug (1) für das Laden eines elektrischen Energiespeichers (3) des Elektrofahrzeuges (1), wobei die Ladevorrichtung (2) eine erste Energieübertragungsschnittstelle (4) aufweist, die über einen ersten elektrischen Energiepfad (5) mit einem energiespeicherseitigen Anschluss (9) verbunden ist, dadurch gekennzeichnet, dass die Ladevorrichtung (2) eine zweite Energieübertragungsschnittstelle (6) aufweist, die über einen zweiten elektrischen Energiepfad (7) mit dem energiespeicherseitigen Anschluss (9) verbunden ist, und dass der zweite elektrische Energiepfad (7) in den ersten elektrischen Energiepfad (5) mündet, wobei der gemeinsame Abschnitt (8) der Energiepfade (5, 7) zwischen der Einmündung des zweiten elektrischen Energiepfades (7) in den ersten elektrischen Energiepfad (5) und dem energiespeicherseitigen Anschluss (9) mindestens ein elektrisches Bauelement (15) aufweist.

## Beschreibung

Die Erfindung betrifft eine Ladevorrichtung zum Einbau in ein Elektrofahrzeug für das Laden eines elektrischen Energiespeichers des Elektrofahrzeuges, wobei die Ladevorrichtung eine erste Energieübertragungsschnittstelle aufweist, die über einen ersten elektrischen Energiepfad mit einem energiespeicherseitigen Anschluss verbunden ist. Die Erfindung betrifft auch ein Elektrofahrzeug mit einem elektrischen Energiespeicher und einer im Elektrofahrzeug integrierten Ladevorrichtung zum Laden des elektrischen Energiespeichers.

Aus dem Stand der Technik sind Ladesysteme bekannt, mit denen ein Elektrofahrzeug konduktiv geladen werden kann. Dazu wird das Elektrofahrzeug über eine Steckverbindung an ein externes Ladegerät angeschlossen. Die US 2011/0273139 A1 zeigt ein derartiges externes Ladegerät.

Bekannt sind auch Ladesysteme, bei denen eine Ladevorrichtung vollständig im Elektrofahrzeug integriert ist. Diese Ladevorrichtung muss nun lediglich an ein externes Netz angeschlossen werden.

Ebenfalls bekannt sind induktive Ladesysteme. Dabei wird über eine induktive Kopplung, die aus einer ausserhalb des Elektrofahrzeuges befindlichen Primärspule und einer im Elektrofahrzeug integrierten Sekundärspule besteht, elektrische Energie übertragen. Die Primärspule kann z. B. im Boden eines Lade-Parkplatzes oder im Fahrbahnboden einer Strasse untergebracht sein. Im letzteren Fall setzt sich die Primärspule aus einer Vielzahl von hintereinander schaltbaren Teilspulen zusammen.

Die US 5,606,237 A offenbart alternativ dazu einen einsteckbaren induktiven Ankoppler zum induktiven Laden von Elektrofahrzeugen. Dabei wird eine mit elektrischer Energie beaufschlagbare Primärspule in eine Art Einsteckbuchse am Fahrzeug eingeschoben. Die Einsteckbuchse ist mit einer Sekundärspule ausgestattet. Obwohl eine mechanische Einsteckverbindung vorgesehen ist, erfolgt die Energieübertragung rein induktiv.

Auf dem Gebiet der externen, also der sich ausserhalb des Elektrofahrzeuges befindlichen Ladegeräte, auch Ladetankstellen genannt, sind Lösungen bekannt, die sowohl Schnittstellen für induktives Laden als auch Schnittstellen für konduktives Laden aufweisen. Dazu weisen diese Ladegeräte induktive und konduktive Ankopplungsstellen auf. Je nachdem welcher Typen von Elektrofahrzeug geladen werden soll, wird die entsprechende Ankopplungsstelle verwendet, so z. B. offenbart in der US 5,926,004 A, US 5,803,215 A oder US 2010/0235006 A1.

Der Nachteil der bekannten Lösungen ist in der mangelnden Flexibilität der Ladesysteme zu sehen. Elektrofahrzeuge aus dem Stand der Technik besitzen nur eine, entweder konduktive oder induktive Energieübertragungsschnittstelle und sind daher darauf angewiesen, dass die von ihnen angefahrene Ladestation die entsprechende Lademöglichkeit zur Verfügung stellt. Probleme ergeben sich auch dadurch, dass zunehmend Ladestrecken zum induktiven Laden während der Fahrt zur Verfügung stehen, die meisten Ladestationen aber nur die konduktive Ladeoption bereitstellen.

Aufgabe der vorliegenden Erfindung ist es somit, eine im Elektrofahrzeug integrierte Ladevorrichtung bereitzustellen, die diesen Nachteil überwindet und es unabhängig von der Art der externen Ladestation ermöglicht, das Elektrofahrzeug zu laden. Die Lösung soll zuverlässig, einfach und kostengünstig herzustellen sein. Eine weitere Aufgabe besteht darin, den Ladevorgang zu verkürzen und das Elektrofahrzeug schneller wieder einsatzbereit zu machen.

Die Aufgabe wird dadurch gelöst, dass die Ladevorrichtung eine zweite Energieübertragungsschnittstelle aufweist, die über einen zweiten elektrischen Energiepfad mit dem energiespeicherseitigen Anschluss verbunden ist, und dass der zweite elektrische Energiepfad in den ersten elektrischen Energiepfad mündet, wobei der gemeinsame Abschnitt der Energiepfade zwischen der Einmündung des zweiten elektrischen Energiepfades in den ersten elektrischen Energiepfad und dem energiespeicherseitigen Anschluss mindestens ein elektrisches Bauelement aufweist.

Dadurch wird fahrzeugseitig ein System geschaffen, das zwei elektrische Energieübertragungsschnittstellen aufweist. Diese können einzeln, aber auch gleichzeitig mit elektrischer Energie beaufschlagt werden, sodass sich im letzteren Fall der Ladevorgang wesentlich verkürzt. Die Energieübertragungsschnittstellen sind bevorzugt unterschiedlicher Art, sodass je nach vorhandener externer Ladestation sowohl induktiv als auch konduktiv geladen werden kann.

Unter Energieübertragungsschnittstelle ist eine Schnittstelle zu verstehen, auf die elektrische Energie bzw. elektrischer Strom übertragen werden können. Die Energieübertragungsschnittstelle nimmt dabei die Energie bzw. den Strom auf bzw. empfängt diese(n). Die Energieübertragungsschnittstellen der erfindungsgemässen Ladevorrichtung sind dabei über Energieübertragungsschnittstellen eines externen Ladegerätes mit elektrischer Energie bzw. Strom beaufschlagbar.

Das Einmünden des zweiten Energiepfades in den ersten Energiepfad stellt eine elektrische Verbindung der Energiepfade dar. Der dabei entstehende gemeinsame Abschnitt vereint die beiden Energiepfade, d. h. es werden im gemeinsamen Abschnitt dieselben Leitungen von beiden Energiepfaden genutzt. Aufgrund der Tatsache, dass mindestens ein elektrisches Bauelement im gemeinsamen Abschnitt der Energiepfade geschaltet ist, muss dieses nicht zweimal vorgesehen sein. Das gemeinsame elektrische Bauelement wird somit sowohl vom ersten Energiepfad, als auch vom zweiten Energiepfad genutzt.

Die Einspeisung der elektrischen Energie, also die Einmündung des zweiten Energiepfades in den ersten Energiepfad erfolgt vorzugsweise auf der Gleichstromseite (Sekundärseite) des ersten Energiepfades.

Die erfindungsgemässe Ladevorrichtung mit seinen beiden Energieübertragungsschnittstellen ist am Fahrzeug verbaut. Die Energieübertragungsschnittstellen der Ladevorrichtung sind am Elektrofahrzeug derart angeordnet, dass sie von einer externen Ladestation mit elektrischer Energie beaufschlagt werden können.

Unter dem Ausdruck energiespeicherseitiger Anschluss ist eine elektrische Verbindung bzw. eine elektrische Verbindungsmöglichkeit zum Energiespeicher zu verstehen.

Bevorzugt ist die erste Energieübertragungsschnittstelle eine konduktive Schnittstelle und die zweite Energieübertragungsschnittstelle eine induktive Schnittstelle. Dies erhöht die Flexibilität, da unabhängig von der Art jeweiligen externen Ladestation bzw. Ladestrecke geladen werden kann.

Bevorzugt ist das elektrische Bauelement des gemeinsamen Abschnittes ein Ausgangsfilter der Ladevorrichtung.

Bevorzugt ist der Ausgangsfilter ein Ripple-Filter zur Reduktion der Ripple-Spannung.

Bevorzugt weist der gemeinsame Abschnitt mindestens zwei elektrische Bauelemente auf, wobei ein Bauelement ein Ausgangsfilter der Ladevorrichtung ist und ein Bauelement ein dem Ausgangsfilter vorgeschalteter Gleichrichter ist. Dadurch kann das Gewicht der Ladevorrichtung weiter reduziert werden. Derselbe Ausgangsfilter und derselbe Gleichrichter werden von beiden Energiepfaden genutzt bzw. wirken auf beide Energiepfade.

Bevorzugt weist der erste Energiepfad zwischen der ersten Energieübertragungsschnittstelle und der Einmündung des zweiten Energiepfades elektrische Bauelemente auf, die die elektrische Spannung verändern, insbesondere in ihrer Höhe und/oder ihrem zeitlichen Verlauf und/oder ihrem Frequenzspektrum. Dies ermöglicht eine optimale Anpassung der Spannung für den Energiespeicher.

Bevorzugt weist der erste Energiepfad zwischen der ersten Energieübertragungsschnittstelle und der Einmündung des zweiten Energiepfades einen Gleichrichter, einen dem Gleichrichter nachgeschalteten DC/AC-Wandler und einen dem DC/AC-Wandler nachgeschalteten Transformator auf. Dies stellt eine besonders vorteilhafte Optimierung des Ladestroms für den Energiespeicher dar.

Bevorzugt weist der zweite Energiepfad zwischen der zweiten Energieübertragungsschnittstelle und der Einmündung in den ersten Energiepfad einen Gleichrichter auf. Dadurch wird die von der zweiten Energieübertragungsschnittstelle übertragene Spannung schon vor Einmündung in den ersten Energiepfad aufbereitet, um einen optimalen Ladestrom für den Energiespeicher zu liefern.

Bevorzugt ist im ersten Energiepfad ein Schalter integriert, mit dem die erste Energieübertragungsschnittstelle vom energiespeicherseitigen Anschluss abkoppelbar ist.

Bevorzugt ist im zweiten Energiepfad ein Schalter integriert, mit dem die zweite Energieübertragungsschnittstelle vom energiespeicherseitigen Anschluss abkoppelbar ist.

Durch einen automatisch oder vom Nutzer betätigbaren Schalter kann die zurzeit nicht verwendete Energieübertragungsschnittstelle einfach abgekoppelt werden.

Bevorzugt ist die erste Energieübertragungsschnittstelle ein Steckeranschluss. Dies ermöglicht eine einfach und standardisierte Ankopplung.

Bevorzugt ist die zweite Energieübertragungsschnittstelle eine Spule aus zumindest einer Schleife. Diese stellt somit die Sekundärseite dar. Die Primärseite muss beim Laden durch das externe Ladegerät ergänzt werden.

Bevorzugt weist der erste Energiepfad einen Transformator auf, wobei ein Teil des Transformators, vorzugsweise die Sekundärwicklung des Transformators, bereits zum gemeinsamen Abschnitt der Energiepfade gehört. Mit anderen Worten: Die Einmündung des zweiten Energiepfades in den ersten Energiepfad erfolgt im Transformator, vorzugsweise in die Sekundärwicklung des Transformators. Dadurch kann zumindest ein Teil des Transformators für beide Energiepfade genutzt werden.

Die Aufgabe wird auch mit einem Elektrofahrzeug mit einem elektrischen Energiespeicher und einer im Elektrofahrzeug integrierten Ladevorrichtung zum Laden des elektrischen Energiespeichers gelöst, wobei die Ladevorrichtung gemäss einer der oben beschriebenen Ausführungsformen ausgebildet ist, und wobei der energiespeicherseitige Anschluss der Ladevorrichtung mit dem Energiespeicher des Elektrofahrzeuges verbunden ist.

Bevorzugt ist die erste Energieübertragungsschnittstelle der Ladevorrichtung ein Steckeranschluss, wobei der Steckeranschluss vorzugsweise im seitlichen Bereich des Elektrofahrzeuges angeordnet ist.

Bevorzugt ist die zweite Energieübertragungsschnittstelle der Ladevorrichtung eine Spule aus zumindest einer Schleife, wobei vorzugsweise die Spule im unteren Bereich, insbesondere im Fahrzeugboden, des Elektrofahrzeuges angeordnet ist. Dies ermöglicht das Laden über im Untergrund, z. B. in einem Parkplatz oder in einem Fahrbahn, eingelassene Primärspule(n).

Im Folgenden werden nochmals Vorteile der Erfindung hervorgehoben. Die erfindungsgemässe Ladevorrichtung vereint zwei Funktionen, die eine hohe Flexibilität erlauben. Je nach Ausbildung der Energieübertragungsschnittstellen kann gleichzeitig (=> rasche Ladung) oder alternativ (d. h. stromquellenunabhängig) aus zwei voneinander unabhängigen Stromquellen Energie zur Ladung des Energiespeichers, insbesondere der Bordbatterie, bezogen werden.

In der besonderen Ausführungsform der induktiven zweiten Energieübertragungsschnittstelle und bei Verwendung eines Transformators im ersten Energiepfad sind mit diesen zwei sekundäre Spulen vorgesehen. Die primäre Spule des ersten Energiepfades ist Bestandteil des on-board-Ladevorrichtung, während die Primärspule für die induktive Energieübertragungsschnittstelle ein externes Ladegerät zur Verfügung stellt.

Die zusammengehörigen primären und sekundären Teile sind vorteilhaft jeweils über eine Hochfrequenzkopplung gekoppelt.

Der zweite Sekundärteil wird gleichstromseitig direkt in die Gleichstromseite des ersten Sekundärteils einspeist, wodurch sich die Integration ergibt. Durch die gemeinsame Benutzung des Ausgangsfilters ergeben sich Synergien: Neben der Gewichtseinsparung durch die Verwendung nur eines Filters wirken im Doppelladebetrieb allenfalls unterschiedliche Welligkeiten aus den beiden unterschiedlichen Sekundärteilen kompensierend, so dass die Belastung des Ausgangsfilters und damit sein Energieverbrauch minimiert wird.

Da die Primärteile oftmals für 3.68 kW Ladeleistung ausgelegt sind, kann somit mit dieser Einrichtung mit über 6 kW geladen werden, sofern beide Stromquellen (konduktiv und induktiv) zur Verfügung stehen. Auch kann unabhängig von der Art der Stromquelle geladen werden.

Es handelt sich somit in der bevorzugten Ausführungsform um eine two-inone Lösung mit im Fahrzeug integrierten ersten und zweiten Energiepfaden, wobei der erste Energiepfad Mittel für die gesamte Stromaufbereitung enthält, also durch einen Transformator getrennte Primärseite und Sekundärseite, und der zweite Energiepfad eine Sekundärseite darstellt, die durch eine vom Ladegerät bereitgestellte Primärseite ergänzt werden muss. In einer Variante wird nicht erst nach dem ausgangsseitigen Gleichrichter sondern schon vor diesem Gleichrichter eingespeist, so dass auch der Gleichrichter wie der Ausgangsfilter doppelt verwendet werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile.

Es zeigen dabei:
- Fig. 1: eine erste Ausführungsform einer erfindungsgemässen Ladevorrichtung,
- Fig. 2: eine zweite Ausführungsform einer erfindungsgemässen Ladevorrichtung,
- Fig. 3: eine dritte Ausführungsform einer erfindungsgemässen Ladevorrichtung,
- Fig. 4: ein Beispiel eines Ausgangsfilters,
- Fig. 5: ein weiteres Beispiel eines Ausgangsfilters,
- Fig. 6: ein erfindungsgemässes Elektrofahrzeug.

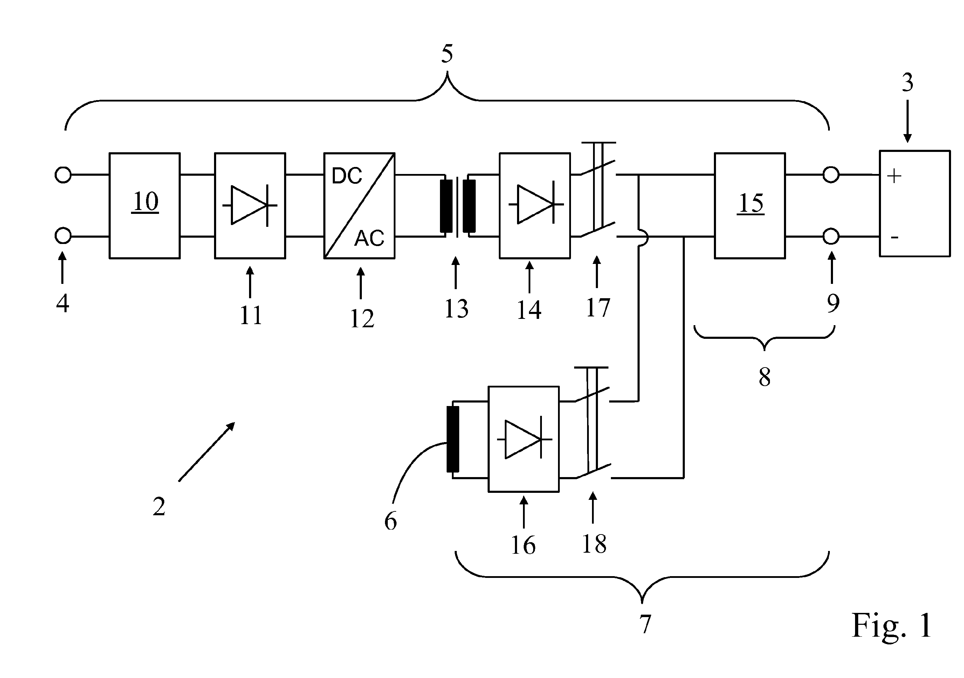

Fig. 1 zeigt eine Ladevorrichtung 2 zum Laden eines elektrischen Energiespeichers 3, insbesondere einer Batterie, eines Elektrofahrzeuges.

Die Ladevorrichtung 2 umfasst eine erste Energieübertragungsschnittstelle 4 in Form einer konduktiven Schnittstelle, z. B. einer Steckverbindung, und eine zweite Energieübertragungsschnittstelle 6 in Form einer indutkiven Schnittstelle, z. B. in Form einer Spule.

Die erste Energieübertragungsschnittstelle 4 ist über einen ersten elektrischen Energiepfad 5 mit einem energiespeicherseitigen Anschluss 9 verbunden und die zweite Energieübertragungsschnittstelle 6 ist über einen zweiten elektrischen Energiepfad 7 mit dem energiespeicherseitigen Anschluss 9 verbunden.

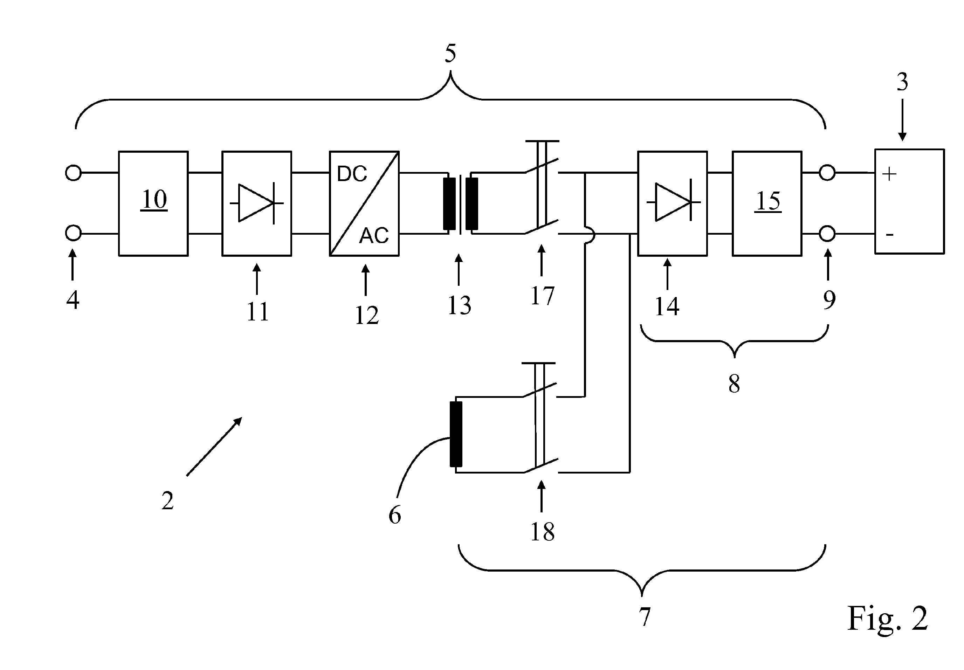

In der Darstellung der Fig. 1 und 2 ist bereits der elektrische Energiespeicher 3 am energiespeicherseitigen Anschluss 9 angekoppelt.

Der zweite elektrische Energiepfad 7 mündet in den ersten elektrischen Energiepfad 5, wodurch ein gemeinsamer Abschnitt 8 der Energiepfade 5, 7 zwischen der Einmündung des zweiten elektrischen Energiepfades 7 in den ersten elektrischen Energiepfad 5 und dem energiespeicherseitigen Anschluss 9 entsteht.

Die Einmündung stellt tatsächlich eine elektrische Verbindung dar, sodass die Energiepfade 5, 7 im gemeinsamen Abschnitt 8 in denselben Leitungen geführt werden. Der gemeinsame Abschnitt 8 enthält ein elektrisches Bauelement in Form eines Ausgangsfilters 15, der dem energiespeicherseitigen Anschluss 8 vorgelagert ist. Das gemeinsam genutzte elektrische Bauelement stellt demnach der Ausgangsfilter 15 der Ladevorrichtung 2 dar. Dieser vorzugsweise als Ripple-Filter ausgebildete Ausgangsfilter 15 dient zur Reduktion der Welligkeit (Ripple-Spannung) und somit zur Optimierung des Ladestromes.

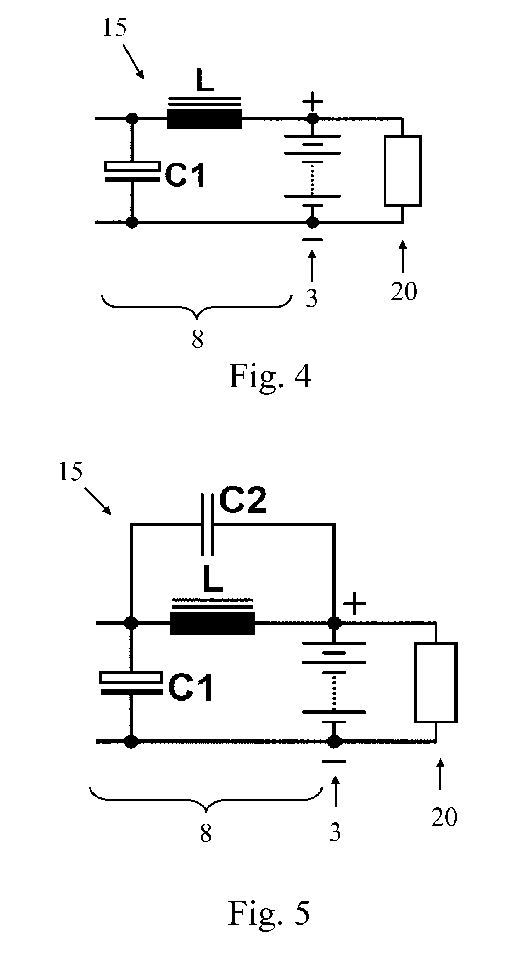

In den Figuren 4 und 5 sind Beispiele für Ausgangsfilter 15 darstellt.

Der erste Energiepfad 5 weist zwischen der ersten, konduktiven Energieübertragungsschnittstelle 4 und der Einmündung des zweiten Energiepfades 7 elektrische Bauelemente auf, die die elektrische Spannung verändern, insbesondere in ihrer Höhe und/oder ihrem zeitlichen Verlauf und/oder ihrem Frequenzspektrum. Diese elektrische Bauelemente umfassen ein Eingangsfilter 10, einen eingangsseitigen Gleichrichter 11, einen dem Gleichrichter 11 nachgeschalteten DC/AC-Wandler 12 und einen dem DC/AC-Wandler 12 nachgeschalteten Transformator 13 sowie einen ausgangsseitigen Gleichrichter 14. Dadurch kann die Eingangswechselspannung in eine in ihrer Höhe angepasste Gleichspannung umgewandelt werden. Der Transformator 13 umfasst eine Primärspule, die mit dem DC/AC-Wandler 12 verbunden ist, und eine Sekundärspule, die mit dem ausgangsseitigen Gleichrichter 14 verbunden ist.

Im ersten Energiepfad 5 ist ein Schalter 17 integriert, mit dem die erste Energieübertragungsschnittstelle 4 vom Energiespeicher 3 abkoppelbar ist.

Ähnlich ist auch im zweiten Energiepfad 7 ein Schalter 18 integriert, mit dem die zweite Energieübertragungsschnittstelle 6 vom energiespeicherseitigen Anschluss 9 abkoppelbar ist. Dieser automatisch oder durch den Nutzer ansteuerbare Schalter 17 bzw. 18 kann je nach aktueller Ladeoption betätigt werden.

Die Schalter 17 und 18 könnten in Fig. 1 auch entfallen, denn durch die beiden Gleichrichter 14 und 16 erfolgt bereits eine Entkopplung der beiden Energiepfade, sodass jeweils nur einer oder beide gleichzeitig benutzt werden können, ohne dass sie sich nennenswert beeinflussen.

Der zweite Energiepfad 7 umfasst zwischen der zweiten, induktiven Energieübertragungsschnittstelle 6 und der Einmündung in den ersten Energiepfad 5 einen Gleichrichter 16. Die anderen, im ersten Energiepfad 5 geschalteten elektrischen Bauelemente sind im zweiten Energiepfad insbesondere dann nicht erforderlich, wenn diese bereits im externen Ladegerät vorgesehen sind. In dieser Hinsicht kommt der zweiten, induktiven Energieübertragungsschnittstelle 6 die Funktion der (rechten) sekundären Wicklung des Transformators 13 zu.

Die erste Energieübertragungsschnittstelle 4 kann z. B. ein Steckeranschluss sein und die zweite Energieübertragungsschnittstelle 6 kann eine Spule aus zumindest einer Schleife sein.

Fig. 2 zeigt eine Variante der Erfindung, die sich von jener aus Fig. 1 dadurch unterscheidet, dass der zweite Energiepfad 7 schon vor dem ausgangsseitigen Gleichrichter 14 in den ersten Energiepfad 5 mündet. Dafür weist der zweite Energiepfad 7 im Unterschied zur Fig. 1 keinen eigenen Gleichrichter mehr auf. In dieser Variante wird der ausgangsseitige Gleichrichter 14 von beiden Energiepfaden 5, 7 genutzt.

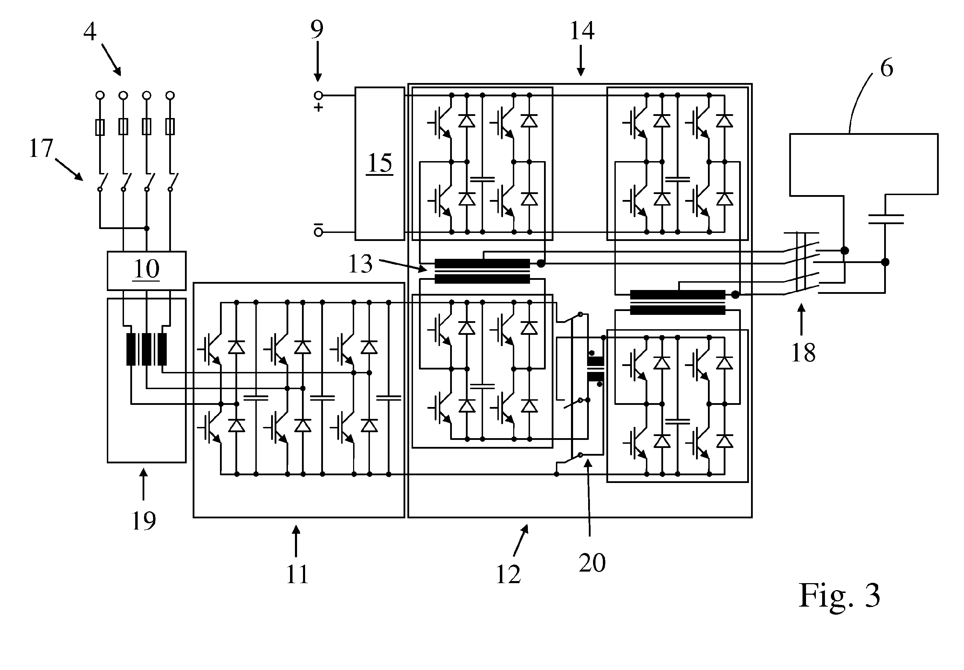

Fig. 3 zeigt eine bevorzugte Ausführungsform, die dieselbe Struktur aufweist wie jene der Fig. 1 und 2, aber detaillierter ausgeführt ist. Diese Variante erlaubt neben einem 1-phasigen Eingang auch einen 3-phasigen Eingang. Zwischen Eingangsfilter 10, z. B. einem EMC-Filter, und Gleichrichter 11 ist zusätzlich eine PFC (Power Factor Correction) -Schaltung 19 geschaltet. Der eingangsseitige Gleichrichter 11 ist in Form eines Softswing-Inverters ausgebildet.

DC/AC-Wandler 12, Transformator 13 und ausgangsseitiger Gleichrichter 14 bilden zusammen einen (insulated) bi-direktionalen DC/DC-Wandler mit einem geschalteten Transformationsverhältnis von 2:1 / 1:1

Dabei sind DC/AC Wandler 12 und ausgangsseitiger Gleichrichter 14 jeweils zweiteilig ausgebildet, wodurch der DC/DC-Wandler zwei parallele Stränge aufweist. Jeder dieser Stränge weist einen eigenen Transformator 13 auf. Der erste Energiepfad weist somit in diesem Abschnitt zwei parallele Stränge auf. Im Bereich des DC/AC-Wandlers 12 sind die beiden Stränge über einen Balance Transformer 20 verbunden.

In dieser Ausführungsform wird auch der zweite Energiepfad in zwei parallele Stränge gesplittet, die jeweils direkt an die beiden Sekundärspulen bzw. an eine Anzapfung der Sekundärwicklung der beiden Transformatoren 13 ankoppeln. Damit wird auch der Transformator des ersten Ladegerätes für den zweiten Energiepfad mit benutzt. Eine Ausführungsform der Erfindung ist daher dadurch gekennzeichnet, dass der erste Energiepfad einen Transformator aufweist, wobei ein Teil des Transformators, vorzugsweise die Sekundärwicklung des Transformators, bereits zum gemeinsamen Abschnitt 8 der Energiepfade 5, 7 gehört. Mit anderen Worten: Die Einmündung des zweiten Energiepfades in den ersten Energiepfad erfolgt im Transformator, vorzugsweise in die Sekundärwicklung des Transformators.

Der Ausgangsfilter 15 kann ebenfalls einen EMC-Filter darstellen. In Fig. 3 erfolgt die Einmündung des zweiten Energiepfades, der von der induktiven Energieübertragungsschnittstelle 6 ausgeht, in den ersten Energiepfad vor dem ausgangsseitigen Gleichrichter 14, d. h. Ausgangsfilter 15 und Gleichrichter 14 befinden sich im gemeinsamen Abschnitt 8 der Energiepfade 5,7.

In einer leichten Abänderung zu Fig. 3 könnte der zweite Energiepfad (analog zu Fig. 1) auch erst unmittelbar vor dem Ausgangsfilter 15 in den ersten Energiepfad münden.

In einer ersten Variante gemäss der Fig. 4 besteht der Ausgangsfilter 15 aus einem Kondensator bzw. Kapazität C1, einer Drosselspule bzw. Induktivität L und Anschlusspolen für einen Energiespeicher 3, insbesondere eine Batterie, die zur Versorgung eines Verbrauchers bzw. Last 20, z. B. Elektromotor, Klimaanlage, Kommunikationseinrichtungen, etc., dient. Der Kondensator C1 ist parallel zu den energiespeicherseitigen Anschlüssen geschaltet, d. h. bei angeschlossenem Energiespeicher 3 ist der Kondensator C1 parallel zum Energiespeicher 3 geschaltet. Die Induktivität L ist zwischen einem energiespeicherseitigen Anschlusspol und einem Pol des Kondensators C1 geschaltet.

Das Ausgangsfilter 15, vorzugsweise als Tiefpassfilter ausgebildet, dient der Aufbereitung des von der Ladevorrichtung 3 kommenden Ladestroms, vorzugsweise zur Reduktion der Welligkeit, auch Ripple genannt.

Figur 5 zeigt eine weitere Variante eines Ausgangsfilters 15, bei dem ein Resonanz-Kondensator C2 parallel zur Induktivität L geschaltet ist. Bei einer Netzspannung von 50 Hz weist der durch den Resonanz-Kondensator C2 gebildete Resonanzfilter vorzugsweise eine Resonanzfrequenz von im Wesentlichen 100 Hz auf. Dieser Resonanzfilter bewirkt dann, dass gezielt jene Frequenz vom Energiespeicher (Batterie) ferngehalten wird, die den Hauptanteil des Stromrippels darstellt.

Der Ausgangsfilter 15 ist jedoch nicht auf die dargestellten Varianten beschränkt. Grundsätzlich ist jede Art von Ausgangsfilter möglich. Im dargestellten Ausführungsbeispiel ist der Ausgangsfilter 15 Teil des gemeinsamen Abschnittes 8 der beiden Energiepfade 5, 7.

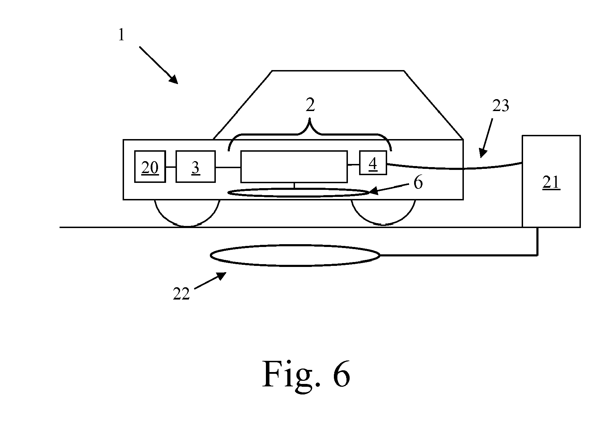

Fig. 6 zeigt in schematischer Darstellung ein erfindungsgemässes Elektrofahrzeug 1 mit einem elektrischen Energiespeicher 3 in Form einer Batterie, mit einem elektrischen Verbraucher 20, der an die Batterie angehängt ist, insbesondere einem Elektromotor, und einer im Elektrofahrzeug 1 integrierten und mit dem Energiespeicher 3 verbundenen Ladevorrichtung 2 zum Laden des elektrischen Energiespeichers 3.

Die erste, konduktive Energieübertragungsschnittstelle 4 der Ladevorrichtung 2 ist ein Steckeranschluss ist, der im seitlichen Bereich des Elektrofahrzeuges 1 angeordnet ist. Die zweite, induktive Energieübertragungsschnittstelle 6 der Ladevorrichtung 2 ist eine Spule aus zumindest einer Schleife, die im unteren Bereich, im vorliegenden Fall im Fahrzeugboden, des Elektrofahrzeuges 1 angeordnet ist.

Zu sehen ist auch ein externes Ladegerät 21, das mit der Ladevorrichtung 2 im Inneren des Elektrofahrzeuges 1 zusammenwirkt. Die Spule 22 des externen Ladegerätes 21, die im Hinblick auf die zweite, induktive Energieübertragungsschnittstelle 6 eine Primärspule darstellt, ist unter dem Elektrofahrzeug 1, vorzugsweise im Boden, angeordnet und überträgt elektrische Energie auf die zweite, induktive Energieübertragungsschnittstelle 6 der Ladevorrichtung 2. Das Ladekabel 23, das in einer Steckverbindung mündet, ist über diese an die erste, konduktive Energieübertragungsschnittstelle 4 angeschlossen. Es kann nun gleichzeitig über beide Energieübertragungsschnittstellen 4, 6 geladen werden oder alternativ nur über eine Energieübertragungsschnittstelle, z. B. wenn das Ladegerät 21 nur eine Option zur Verfügung stellen würde.

### Bezugszeichen liste

- 1: Elektrofahrzeug
- 2: Ladevorrichtung
- 3: Energiespeicher
- 4: erster elektrischer Energiepfad
- 5: erste Energieübertragungsschnittstelle
- 6: zweiter elektrischer Energiepfad
- 7: zweite Energieübertragungsschnittstelle
- 8: gemeinsamer Abschnitt
- 9: energiespeicherseitiger Anschluss
- 10: Eingangsfilter
- 11: Gleichrichter
- 12: DC/AC-Wandler
- 13: Transformator
- 14: Gleichrichter
- 15: Ausgangsfilter
- 16: Gleichrichter
- 17: Schalter
- 18: Schalter
- 19: PFC-Schaltung
- 20: elektrischer Verbraucher, z. B. Elektromotor
- 21: externes Ladegerät
- 22: externe Spule
- 23: Verbindungskabel
- C1, C2: Kondensatoren
- L: Induktivität

## Patentansprüche

1. Ladevorrichtung (2) zum Einbau in ein Elektrofahrzeug (1) für das Laden eines elektrischen Energiespeichers (3) des Elektrofahrzeuges (1), wobei die Ladevorrichtung (2) eine erste Energieübertragungsschnittstelle (4) aufweist, die über einen ersten elektrischen Energiepfad (5) mit einem energiespeicherseitigen Anschluss (9) verbunden ist, **dadurch gekennzeichnet, dass** die Ladevorrichtung (2) eine zweite Energieübertragungsschnittstelle (6) aufweist, die über einen zweiten elektrischen Energiepfad (7) mit dem energiespeicherseitigen Anschluss (9) verbunden ist, und dass der zweite elektrische Energiepfad (7) in den ersten elektrischen Energiepfad (5) mündet, wobei der gemeinsame Abschnitt (8) der Energiepfade (5, 7) zwischen der Einmündung des zweiten elektrischen Energiepfades (7) in den ersten elektrischen Energiepfad (5) und dem energiespeicherseitigen Anschluss (9) mindestens ein elektrisches Bauelement (15) aufweist.

2. Ladevorrichtung nach Anspruch 1, **dadurch gekennzeichnet, dass** die erste Energieübertragungsschnittstelle (4) eine konduktive Schnittstelle ist und die zweite Energieübertragungsschnittstelle (6) eine induktive Schnittstelle ist.

3. Ladevorrichtung nach Anspruch 1 oder 2, **dadurch gekennzeichnet, dass** das elektrische Bauelement des gemeinsamen Abschnittes (8) ein Ausgangsfilter (15) der Ladevorrichtung (2) ist.

4. Ladevorrichtung nach Anspruch 3, **dadurch gekennzeichnet, dass** der Ausgangsfilter (15) ein Ripple-Filter zur Reduktion der Ripple-Spannung ist.

5. Ladevorrichtung nach einem der vorhergehenden Ansprüche, **dadurch gekennzeichnet, dass** der gemeinsame Abschnitt (8) mindestens zwei elektrische Bauelemente aufweist, wobei ein Bauelement ein Ausgangsfilter (15) der Ladevorrichtung (2) ist und ein Bauelement ein dem Ausgangsfilter (15) vorgeschalteter Gleichrichter (14) ist.

6. Ladevorrichtung nach einem der vorhergehenden Ansprüche, **dadurch gekennzeichnet, dass** der erste Energiepfad (5) zwischen der ersten Energieübertragungsschnittstelle (4) und der Einmündung des zweiten Energiepfades (7) elektrische Bauelemente (10, 11, 12, 13, 14) aufweist, die die elektrische Spannung verändern, insbesondere in ihrer Höhe und/oder ihrem zeitlichen Verlauf und/oder ihrem Frequenzspektrum.

7. Ladevorrichtung nach Anspruch 6, **dadurch gekennzeichnet, dass** der erste Energiepfad (5) zwischen der ersten Energieübertragungsschnittstelle (4) und der Einmündung des zweiten Energiepfades (7) einen Gleichrichter (11), einen dem Gleichrichter (11) nachgeschalteten DC/AC-Wandler (12) und einen dem DC/AC-Wandler (12) nachgeschalteten Transformator (13) aufweist.

8. Ladevorrichtung nach einem der vorhergehenden Ansprüche, **dadurch gekennzeichnet, dass** der zweite Energiepfad (7) zwischen der zweiten Energieübertragungsschnittstelle (6) und der Einmündung in den ersten Energiepfad (5) einen Gleichrichter (16) aufweist.

9. Ladevorrichtung nach einem der vorhergehenden Ansprüche, **dadurch gekennzeichnet, dass** im ersten Energiepfad (5) ein Schalter (17) integriert ist, mit dem die erste Energieübertragungsschnittstelle (4) vom energiespeicherseitigen Anschluss (9) abkoppelbar ist.

10. Ladevorrichtung nach einem der vorhergehenden Ansprüche, **dadurch gekennzeichnet, dass** im zweiten Energiepfad (5) ein Schalter (18) integriert ist, mit dem die zweite Energieübertragungsschnittstelle (4) vom energiespeicherseitigen Anschluss (9) abkoppelbar ist.

11. Ladevorrichtung nach einem der vorhergehenden Ansprüche, **dadurch gekennzeichnet, dass** die erste Energieübertragungsschnittstelle (4) ein Steckeranschluss ist.

12. Ladevorrichtung nach einem der vorhergehenden Ansprüche, **dadurch gekennzeichnet, dass** die zweite Energieübertragungsschnittstelle (6) eine Spule aus zumindest einer Schleife ist.

13. Elektrofahrzeug (1) mit einem elektrischen Energiespeicher (3) und einer im Elektrofahrzeug (1) integrierten Ladevorrichtung (2) zum Laden des elektrischen Energiespeichers (3), **dadurch gekennzeichnet, dass** die Ladevorrichtung (2) nach einem der vorhergehenden Ansprüche ausgebildet ist, wobei der energiespeicherseitige Anschluss (9) der Ladevorrichtung (2) mit dem Energiespeicher (3) des Elektrofahrzeuges (1) verbunden ist.

14. Elektrofahrzeug nach Anspruch 13, **dadurch gekennzeichnet, dass** die erste Energieübertragungsschnittstelle (4) der Ladevorrichtung (2) ein Steckeranschluss ist, wobei der Steckeranschluss vorzugsweise im seitlichen Bereich des Elektrofahrzeuges (1) angeordnet ist.

15. Elektrofahrzeug nach Anspruch 13 oder 14, **dadurch gekennzeichnet, dass** die zweite Energieübertragungsschnittstelle (6) der Ladevorrichtung (2) eine Spule aus zumindest einer Schleife ist, wobei vorzugsweise die Spule im unteren Bereich, insbesondere im Fahrzeugboden, des Elektrofahrzeuges (1) angeordnet ist.
